(19)

Europäisches
Patentamt
European
Patent Office
Office européen
des brevets

(11) **EP 4 664 080 A1**

(12) **EUROPEAN PATENT APPLICATION**

(43) Date of publication:
**17.12.2025 Bulletin 2025/51**

(21) Application number: **25181909.0**

(22) Date of filing: **10.06.2025**

(51) International Patent Classification (IPC):
**G01G 19/10** $^{(2006.01)}$ **B60C 23/06** $^{(2006.01)}$

(52) Cooperative Patent Classification (CPC):
**G01G 19/10; B60C 23/002; B60C 23/066**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.06.2024 IT 202400013171**

(71) Applicants:
- **CNH Industrial Italia S.p.A.**
  **10156 Torino (IT)**
- **Politecnico di Milano**
  **20133 Milano (IT)**

(72) Inventors:
- **Leati, Eugenio**
  **10156 Turin (IT)**

- **Lenzini, Nicola**
  **10156 Turin (IT)**
- **Lucchini, Alberto**
  **20133 Milano (IT)**
- **Matteo Savaresi, Sergio**
  **20133 Milano (IT)**
- **Formentin, Simone**
  **20133 Milano (IT)**
- **Norgia, Michele**
  **20133 Milano (IT)**
- **Giuseppe Cestari, Raffaele**
  **20133 Milano (IT)**
- **Cavedo, Federico**
  **20133 Milano (IT)**

(74) Representative: **CNH Industrial IP Department**
**Leon Claeysstraat 3A**
**8210 Zedelgem (BE)**

(54) **MEASURING A LOAD ON AN AGRICULTURAL VEHICLE**

(57) The present invention relates to a computer-implemented method for calculating the load on a tire of a work vehicle comprising obtaining an orientation signal that indicates the orientation of a distance measuring sensor in relation to the ground surface, and in response to determining that an angle between the orientation of the distance measuring sensor and the ground surface is within a predetermined range, obtaining, from the distance measuring sensor, a first distance signal indicating the distance between the inner surface of the tire and the rim and calculating a load on the tire based on the measured distance signal and the pressure on the tire.

Fig. 1

**EP 4 664 080 A1**

## Description

BACKGROUND OF THE INVENTION

The present invention relates to a method of measuring the load on an axle of a work vehicle and an apparatus configured to implement said method. The work vehicle may be an agricultural vehicle such as a tractor, a combine harvester, a baler, a forage harvester or any other vehicle suitable for agricultural applications.

Modern work vehicles can optimize various of their operational parameters to improve, for example, their fuel efficiency, power output, traction or other operational characteristics. Some work vehicles, for example, can reduce the pressure on the front or rear wheels to improve the comfort of the driver, or can adjust the pressure to reduce the power losses on the wheels. Other work vehicles may adjust the strength of their suspensions based on their weight. Yet even other work vehicles may adjust their speed or acceleration based on whether they are carrying extra weight, for example if loaded with crop or if an implemented is mounted on them. It is thus beneficial to have an estimation of the weight of the work vehicle, more specifically of the weight on the front or rear axles, and even more specifically of the weight applied on a specific wheel of the work vehicle.

Various ways may be found in the prior art to determine the weight of the vehicle. For example, EP4186716A1 describes measuring the hydraulic pressure of suspension actuators mounted on a wheel or axle as a way to determine such weight. However, such approaches may often require maintenance or may be hard to calibrate.

It is an aim of the present invention to provide a method and apparatus that enables measuring a load on or weight of an agricultural vehicle that improves on the prior art.

SUMMARY OF THE INVENTION

The present invention relates to estimating the weight on a wheel or tire when in use. More specifically, the present invention relates to a computer-implemented method for calculating the load on a tire of a work vehicle as defined in claim 1, a load-calculating apparatus for a tire of a work vehicle as defined in claim 10 and a work vehicle comprising a load-calculating apparatus as defined in claim 14.

According to a first aspect of the present invention, there is provided a computer-implemented method for calculating the load on a tire of a work vehicle, the tire being mounted on a rim of the work vehicle, the tire having an inner surface facing the rim and an outer surface, the outer surface being in contact with a ground surface when the work vehicle is in use, the method comprising obtaining an orientation signal, the orientation signal indicating the orientation of a distance measuring sensor in relation to the ground surface, determining, based on the orientation signal, that a first angle between the orientation of the distance measuring sensor and the ground surface is within a predetermined range, in response to determining that the first angle between the orientation of the distance measuring sensor and the ground surface is within a predetermined range, obtaining, from a distance measuring sensor, a first distance signal, the first distance signal indicating the distance between the inner surface of the tire and the rim, obtaining a pressure signal, the pressure signal indicating the pressure of a gas inside the tire, and calculating a load on the tire based on the measured distance signal and the pressure signal.

Advantageously, using the orientation of the distance measuring sensor as a trigger to activate or deactivate the distance measuring sensor ensures that the measurements are taken at the appropriate times, reduces the effect of uneven terrain on the vehicle and may result in less measurements needed thus reducing the computational complexity of and processing requirements for estimating the load on a wheel of a vehicle. As such, the invention according to the first aspect results in a more reliable and efficient load estimation method. The distance measuring sensor may be mounted on the rim and facing the tire. Alternatively, the distance measuring sensor may be mounted on the tire and facing the rim.

The orientation signal may be provided by an orientation sensor mounted on the distance measuring sensor.

The distance signal may be obtained from the distance measuring sensor in response to determining that the angle between the orientation of the distance measuring sensor and the ground surface is 90 degrees.

The distance measuring sensor may be a time-of-flight sensor.

The distance measuring sensor may be a laser distance sensor.

The orientation sensor may comprise at least a gyroscope, an accelerometer or a geomagnetic field sensor.

The first aspect of the invention may further comprise determining, based on the orientation signal, that a second angle between the orientation of the distance measuring sensor and the ground surface is within a second predetermined range, and in response to determining that the second angle between the orientation of the distance measuring sensor and the ground surface is within the first predetermined range, obtaining, from the distance measuring sensor, a second distance signal, the distance signal indicating the distance between the inner surface of the tire and the rim and calculating the load on the tire based on the first angle, the first measured distance, the second angle, the second measured distance, and the pressure signal.

According to a second aspect of the present invention, there is provided a load-calculating apparatus for a tire of a work vehicle, the tire being mounted on a rim of the work vehicle, the tire having an inner surface facing the rim and an outer surface, the outer surface being in contact with a ground surface when the work vehicle is in use, the load-calculating apparatus comprising a distance measuring sensor configured to output a distance signal, the distance signal indicating the distance between the inner surface of the tire of the work vehicle and the rim, an orientation sensor configured to output an orientation signal, the orientation signal indicating the orientation of the distance measuring sensor in relation to a ground surface, and a controller configured to implement the computer-implemented method of any of the preceding claims.

The distance measuring sensor, the orientation sensor and the controller may be combined in a single sensor package. Alternatively, the distance measuring sensor and the orientation sensor may be combined in a single sensor package and communicate in a wired or wireless manner with the controller.

The controller may be communicatively coupled to a central controller of the work vehicle to obtain the pressure signal.

The central controller may comprise a central tire inflation system, the central tire inflation system being configured to maintain the tires of the work vehicle at a pre-defined pressure.

BRIEF DESCRIPTION OF THE DRAWINGS

Embodiments of the present invention are best understood with reference to the accompanying figures, in which:

- Figure 1 is a perspective view of a work vehicle, according to one or more embodiments;
- Figure 2 is a cross-section view of a wheel of a work vehicle, according to one or more embodiments;
- Figure 3 is a cross-section view of a tire and sensor assembly according to one or more embodiments when the tire is not in contact with a ground surface;
- Figure 4 is a cross-section view of a tire and sensor assembly according to one or more embodiments when the tire is in contact with a ground surface;
- Figure 5 is a cross-section view of a tire and sensor assembly according to one or more embodiments when the tire is in contact with a ground surface, overlaying two moments in time when the sensor assembly is at two different angles to the ground;
- Figure 6 is a flow diagram of a process for estimating the load on a tire of a work vehicle, according to one or more embodiments;
- Figure 7 is a flow diagram of a process for estimating the load on a tire of a work vehicle, according to one or more embodiments; and
- Figure 8 illustrates a set of experimental data that can be used to determine the relationship between tire compression and load on tire for different tire stiffness values;

DETAILED DESCRIPTION OF THE DRAWINGS

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

As used herein, a "work vehicle" may be a self-propelled vehicle such as a tractor, a combine harvester, an excavator, or a towed vehicle such as a baler, a sprayer and the like. Accordingly, the tasks that a work vehicle may perform include pulling objects (e.g., an agricultural implement or a trailer), pushing objects (e.g., plow), lifting objects with an attachment (e.g., bales of hay), carrying objects, and the like.

Depending on the task the work vehicle is performing, a different load profile may be placed on the work vehicle. As used herein, a "load profile" is intended to describe the magnitude and/or distribution of load placed on the work vehicle. For example, an off-road tractor pulling a sixteen row planting implement may have a load profile that places one thousand newtons on each of the rear tires and five hundred newtons on each of the front tires because the weight of the planting implement is primarily distributed to the rear tires. On the other hand, an off-road tractor with a loader attachment may have a load profile that places eight hundred newtons on each of the front tires and six hundred newtons on each of the rear tires because the weight of the loader attachment is primarily distributed to the front tires. Additionally, when the loader attachment is used to lift an object (e.g., a bale of hay), the load profile may change again.

However, as the load profile changes, the operational characteristics of the work vehicle may be affected. More specifically, in some embodiments, the operational characteristics may be affected by performance of the tires on the work vehicle as a result of the changing load profile. Furthermore, knowing the load profile may allow estimating the effect that the work vehicle may have on its environment. For example, knowing the weight of a work vehicle operating on an agricultural field may allow estimating the compaction effected on the soil by the vehicle. Such information may allow mapping the different compaction values across an agricultural field and allow storing this value map for later use, for example when there is a desire to seed, plow or water the field. It is therefore advantageous to be able to estimate or derive the load placed on an axle or tire of the work vehicle.

Accordingly, the present disclosure describes various methods and apparatus for determining a load placed on a tire of the work vehicle.

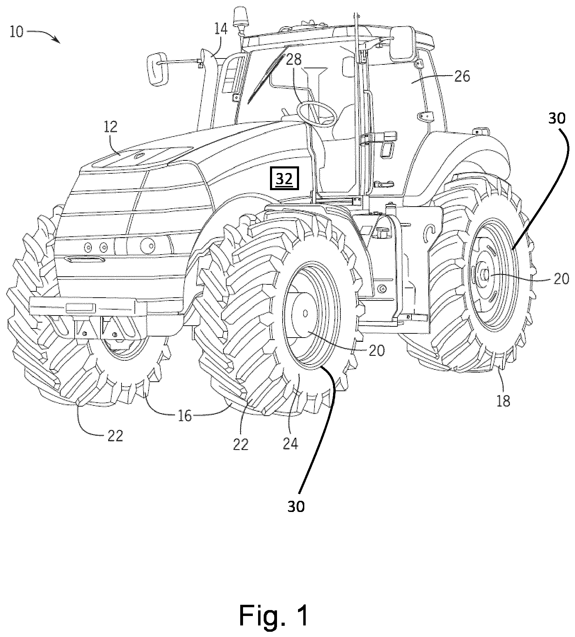

Figure 1 illustrates a work vehicle which may be fitted with an apparatus according to the present disclosure. The depicted off-road work vehicle 10 is an tractor, such as a Puma® Series Tractor, made available by CNH. However, in alternate embodiments, the techniques described herein may be utilized in any suitable work vehicle that has applications in the agricultural or construction sector, as described above.

Work vehicle 10 includes a body 12, which may house an engine, transmission, cooling system, and power train (not separately shown) . Additionally, as depicted, the work vehicle 10 includes an exhaust pipe 14, which may carry exhaust gas away from the vehicle 10.

Work vehicle 10 includes a controller 32 which is communicatively and/or mechanically coupled with various components of the work vehicle 10. Controller 32 may include a central tire inflation system, CTIS, which ensures that the tires of work vehicle 10 are maintained at a pre-defined pressure. Controller 32 may be communicatively coupled with various sensors of the work vehicle, for example speed sensor, fuel sensor, radar/lidar sensors, pressure sensors for the tires etc. Controller 32 is able to obtain from and send signals to these sensors, or to sub-controllers of subassemblies of the work vehicle 10, although for clarity such sub-controllers are not illustrated in Figure 1.

Work vehicle 10 includes two front tires 16 and two rear tires 18 mounted on respective rims 30 and coupled to the vehicle 10 by respective axles 20. As depicted in Figure 1, each tire 16 and 18 includes a tread portion 22 and a sidewall portion 24. More specifically, the tires 16 and 18 may rotate via their respective rims 30 about the axle 20 such that the tread 22 engages the ground to move the off-road vehicle 10. In some embodiments, the axles 20 may be coupled to respective suspension systems (e.g., springs and/or shock absorbers) to reduce the effect of bumps and/or vibrations experienced by the wheels 16 and 18.

Work vehicle 10 also includes a cabin 26 where an operator may sit or stand to control and/or monitor operation of the off-road work vehicle 10. For example, an operator may control the direction of work vehicle 10 using steering wheel 28. In addition, optionally, the operator may view operating conditions of the work vehicle 10 using a display panel and/or indicator lights. Additionally, the operator may adjust the operating conditions using various controls (e.g., buttons and/or levers).

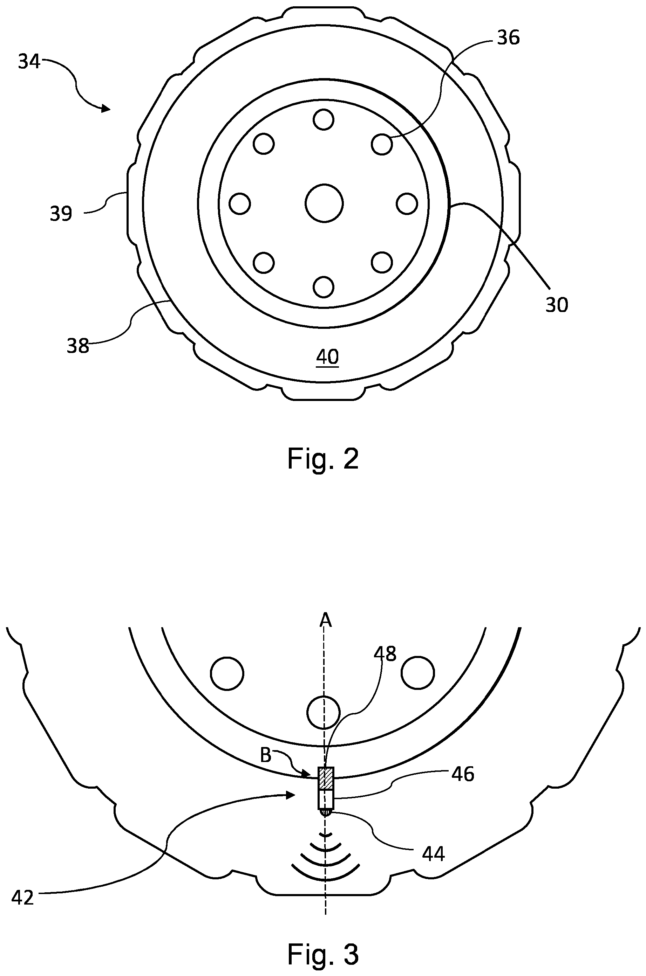

Figure 2 illustrates a tire 34 which may be fitted with an apparatus according to the present disclosure. Tire 34 can be used as tire 16 or tire 18. Tire 34 may be mounted on rim 30. Rim 30 may be mounted on the axle 20 of a vehicle via at least one bolt 36, thus allowing the tire 34 to be used to enable work vehicle 10 to traverse an environment, which may be a crop field, a dirt road, an asphalt road etc. Tire 34 comprises an inner surface facing the rim and an outer surface 39, the outer surface 39 being in contact with a ground surface when the tire 34 is in use. In some embodiments, tire 34 may comprise an inner layer 38 arranged to be inflated. Tire 34 and/or the inner layer 38 (if present) define a volume 40 which, when the tire is in use, is inflated with a gas to a predefined desired pressure. Tire 34 and/or inner layer 38 (if present) may be inflated via a pressure valve positioned on an opening on the rim that allows providing a gas to the volume 40 or withdrawing gas from volume 40. These openings may be coupled to a valve and/or controlled by controller 32 to enable controller 32 and/or the CTIS to maintain the pressure of the gas in volume 40 to the desired value.

Figure 3 illustrates an apparatus 42 for tire 34 according to the present disclosure. Apparatus 42 may be used for calculating the load on the tire 34 of a work vehicle when the work vehicle is in use. To facilitate review of Figure 3, only elements that have not been described before are referenced. Apparatus 42 is not depicted in scale, but has been enlarged to facilitate review of this disclosure.

Apparatus 42 comprises a distance measuring sensor 44 configured to output a distance signal, wherein the distance signal is indicating the distance between the inner surface 38 of the tire 34 and the rim 30 of the work vehicle. In the example of Figure 3 the distance measuring sensor 44 is mounted on the rim 30 and is arranged to be facing the tire 34, and more specifically, to be facing inner surface 38 of the tire 34. Thus, the distance measuring sensor 44 is oriented to measure the distance between the inner surface 38 and the rim 30 on the axis A, wherein the axis A is defined by the center of rotation of the wheel when the wheel is in use (which coincides with the longitudinal axis of the axle) and the point of the rim B on which the apparatus 42 is mounted. Additionally or alternatively, the distance measuring sensor is oriented so that it measures a distance in a direction perpendicular to the a plane tangential to the surface of the rim 30 facing the inner surface 38 of the tire 34. In other examples the distance measuring sensor 44 may be mounted on the tire 34, for example on the inner surface 38 and arranged to be facing the rim 30. The distance measuring sensor 44 may be a time-of-flight sensor. In a preferred version of the invention, the distance measuring sensor may be a laser-based distance sensor. A laser-based distance sensor may be advantageous over other types of distance measuring sensors as it can have improved sensitivity, bandwidth, power efficiency and/or resolution over other types of sensors. However, other types of distance measuring sensors may be used such as ultrasonic sensors or infrared sensors. Although an ultrasonic sensor may suffer from, e.g., lower power efficiency in comparison to laser-based distance sensors, they may offer improvements in, for example, the signal-to-noise ration, SNR, in the measurements or if the inner surface of tire 34 is lined with a non-reflective liner.

Apparatus 42 also comprises an orientation sensor 46 configured to output an orientation signal. The orientation signal is indicative of the orientation or angle of the distance measuring sensor 44 in relation to a ground surface (not shown in Figure 3). Thus, when the tire 34 is in use, the orientation sensor 46 may output a signal indicative of the angle formed by axis A and the surface on which the working vehicle 10 is positioned. In some examples of the invention, the orientation sensor 46 may comprise at least one of a gyroscope, an accelerometer and/or a geomagnetic field sensor. As tire 34 rotates, the orientation sensor 46 may be able to measure both the gravitational acceleration and the centrifugal acceleration applied on tire 34 due to the rotation of tire 34. In some examples, wherein orientation sensor 46 comprises both a gyroscope and an accelerometer, the readings of the gyroscope may be used to improve the accuracy of the accelerometer or vice versa, by distinguishing or discriminating measurements of acceleration based on their source. In the example illustrated in Figure 3, the orientation sensor 46 is mounted on the distance measuring sensor 44.

In some examples the distance measuring sensor 44 and the orientation sensor 46 may be combined in a single sensor package. Alternatively, the orientation sensor 46 may be separate to the distance measuring sensor 44. If orientation sensor 46 is separate to the distance measuring sensor 44, orientation sensor 46 may be arranged in a fixed spatial arrangement with distance measuring sensor 44, enabling determining the orientation of the distance measuring sensor 44 based on the orientation of the orientation sensor 46.

Apparatus 42 also comprises a computing unit or controller 48. Controller 48 is communicatively coupled to the distance measuring sensor 44 and orientation sensor 46, thus enabling information such as the distance signal and the orientation signal to be obtained by controller 48 from the respective sensors. Controller 48 is also communicatively coupled to controller 32, thus enabling information such as, for example, the pressure of the tire 32, the velocity of working vehicle 10 or even the inclination of working vehicle 10 to be provided to the controller 48 by the controller 32.

In the example depicted in Figure 3, controller 48 is battery-powered, and is coupled to a battery (not shown) that supplies power to controller 48. The battery that powers controller 48 may also be configured to provide power to the distance measuring sensor 44 and orientation sensor 46. Additionally or alternatively, controller 48 may be coupled to an energy harvesting device, which accumulates energy as the tire 34 rotates. Additionally or alternatively, controller 48 may draw power from working vehicle 10, for example from controller 32 using a wiring system that couples controller 48 to controller 32. Alternatively, each of the components of apparatus 42 may have their respective individual source of power, for example separate batteries or separate energy harvesting devices or a combination of the above. Additionally or alternatively, controller 48 may be electrically coupled to a first conductive plate, arranged on the rim such that as the tire 34 rotates, the first conductive plate creates a capacitance with a second conductive plate installed on the axle 20 and electrically coupled to a source of current. In such cases, the electrical capacitance created between the first and second conductive plates may be used to provide power to controller 48 and/or exchange information between controllers 32 and 48 with accordingly modulated signals.

In the example depicted in Figure 3, controller 48 is combined with the distance measuring sensor 44 and the orientation sensor 46 in a single sensor package. Alternatively, controller 48 may be separate to the distance measuring sensor 44 and the orientation sensor 46. In such examples, the controller 48 may be mounted on a different part of the rim 30.

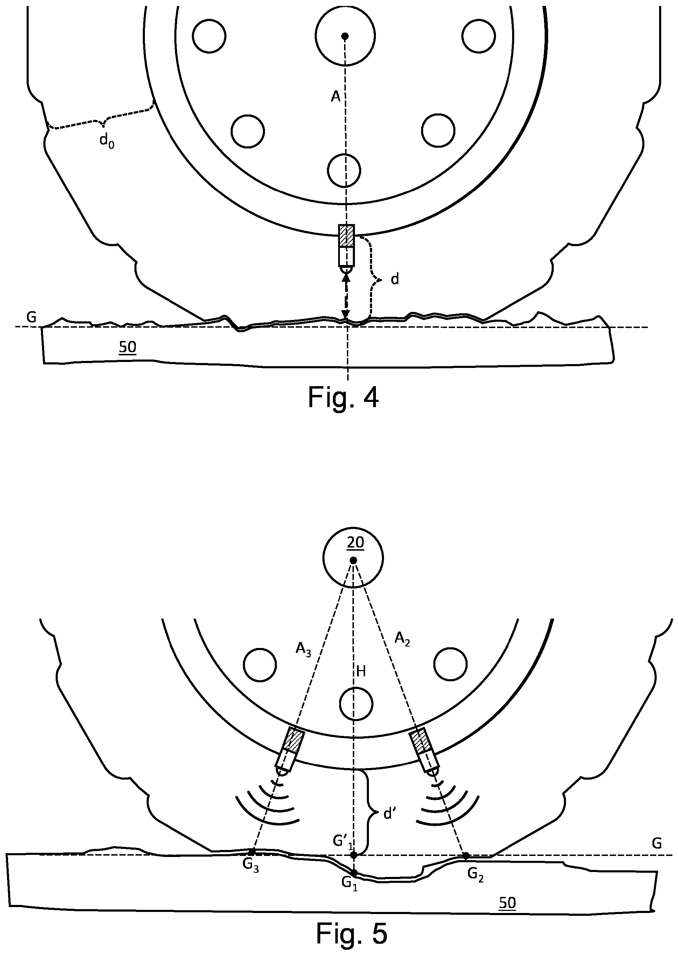

Figure 3 depicts tire 34 when there is no compression on the tire. In such a case, and for a desired pressure value as maintained by the CTIS, the distance measuring sensor 44 would measure the maximum possible distance between the rim 30 and the inner surface 38 of the tire 34. However, when tire 34 is in use, the part of the tire 34 that is in contact with the ground compresses as depicted in Figure 4. The part of the tire 34 that is in contact with the ground may be referred to as a contact patch.

Figure 4 depicts tire 34 and apparatus 42 when in use in a working vehicle 10. As working vehicle 10 moves, tire 34 rotates and accordingly distance measuring sensor 44 rotates around the axle. Controller 48 obtains from orientation sensor 46 an orientation signal, wherein the orientation signal indicates the orientation or angle of measurement of distance measuring sensor 44 in relation to the ground surface 50. In some embodiments, distance measuring sensor 44 continuously measures the distance d between the rim 30 and the inner surface 38, and only outputs a signal to controller 48 when controller 48 requests a measurement from distance measuring sensor 44. In other embodiments, distance measuring sensor 44 may only measure the distance d between the rim 30 and the inner surface 38 when controller 48 requests a measurement from distance measuring sensor 44.

When distance measuring sensor is facing towards the ground surface 50 and the orientation of the distance measuring sensor 44 is within a predetermined angle range, controller 48 obtains from the distance measuring sensor 44 a first distance signal, the first distance signal indicating the distance d between the inner surface 38 of the tire 34 and the rim 30. The predetermined angle range may be any of 80-100 degrees, 85-95 degrees, or 89-91 degrees. In a preferred embodiment of the invention, the distance signal is obtained from the distance measuring sensor in response to determining that the angle between the orientation of the distance measuring sensor 44 and the ground surface 50 on a notional plane G is 90 degrees, wherein the notional plane G is an approximation of ground surface 50, or a plane perpendicular to the direction of gravity and adjacent to the contact patch. Notional plane G is depicted in Figure 4 with a dashed line. Additionally or alternatively, controller 48 may calculate the orientation of the distance measuring sensor 44 in relation to the ground surface 50 based on the orientation signal received from orientation sensor 46 and an inclination signal obtained from controller 32, wherein the inclination signal indicates the angle of the longitudinal axis of working vehicle 10 in relation to the direction of gravity. Thus, controller 48 obtains from distance measuring sensor 44 a value d that may be used to calculate the compression of the tire 34 by measuring the distance between the inner surface 38 of the tire 34 and rim 30 when facing the contact patch. The compression c is obtained from the measured distance d as

$$c = d_0 - d$$

where $d_0$ is the distance of the inner surface 38 from the rim at parts of tire 34 that are not in contact with the ground surface 50, i.e. the distance of the inner surface 38 from the rim at parts of the tire 34 that are not part of the contact patch. In some embodiments, $d_0$ may be stored in a memory of controller 48 or controller 32. Additionally, or alternatively, $d_0$ may be measured using the distance measuring sensor 44 when the controller 48 determines, based on an output of the orientation sensor 46, that distance measuring sensor 44 faces away from the ground surface. Thus, controller 48 may determine the load on tire 34 based on the measured distance signal and the known pressure of tire 34 using the formula:

$$L = k_{tire} \ (p) * c$$

where $k_{tire}$ is the vertical tire stiffness, and can be quantified as the ratio between tire compression and applied vertical load, as a function of the tire pressure.

Tire stiffness $k_{tire}$ as a function of pressure may be stored on a memory of controller 32, for example in a look-up table, and may be known a priori from the tire manufacturer or determined via testing.

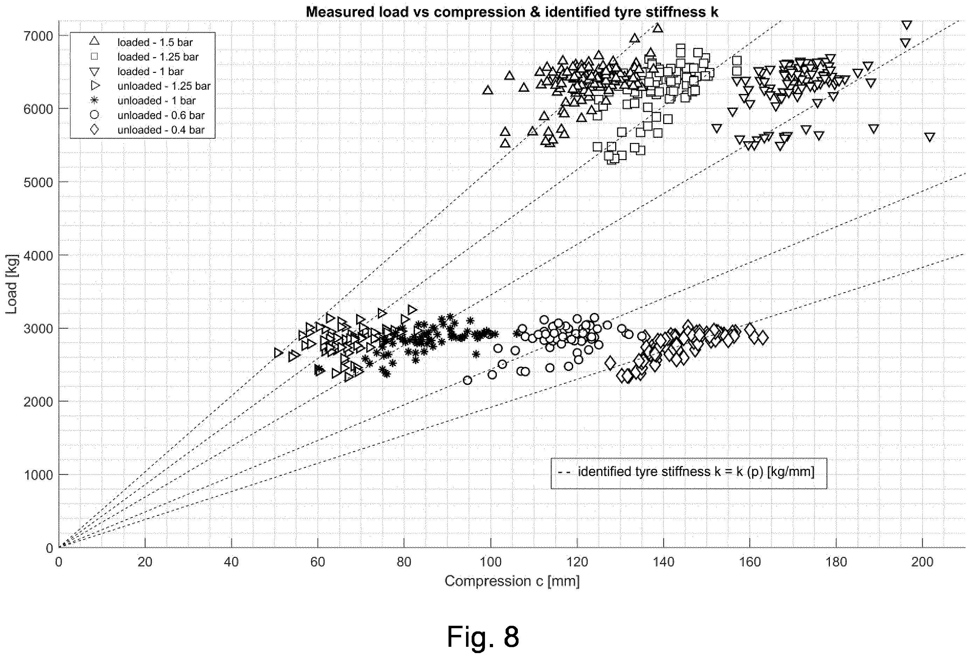

Controller 32 may undergo a calibration method for associating a specific load to the compression of tire 34 for specific $k_{tire}$ and/or pressure P. Figure 8 illustrates an example of test data collected during said calibration method, wherein tire stiffness is identified for various values of pressure at two different tractor load conditions (unloaded, loaded). The output of the calibration is a set of N stiffness values for a set of N test pressures. The stiffness for an arbitrary pressure can be calculated through interpolation of the calibration set, followed by determining a linear fit for the data points of load as a function of tire compression and/or the pressure of the tire 34.

Optionally, controller 48 or controller 32 may use the calculated load on tire 34 to calculate the load on the axle that tire 34 is mounted on, for example the rear axle if tire 34 corresponds to tire 18.

In certain cases, ground surface 50 may contain potholes or bumps that may result in the inner layer 38 of tire 34 being less or more compressed than if the ground surface 50 was flat. These measurements may result in less accurate calculations of the load on tire 34. Figure 5 describes an alternative example of the invention that may be more tolerant of uneven ground surfaces. For clarity, only elements that have not been previously described are referenced in Figure 5.

In the example illustrated in Figure 5, if controller 48 were to obtain a measurement from distance measuring sensor 44 when distance measuring sensor 44 was oriented towards point $G_1$, controller 48 would ascertain the compression of tire 34 to be different to what it actually is for example at points $G_2$ or $G_3$. To reduce the likelihood of inaccurate calculation of load, controller 48 obtains two different measurements from distance measuring sensor 44 at times $t_2$ and $t_3$ respectively. Times $t_2$ and $t_3$ are determined based on the output of the orientation sensor such that the orientation of distance measuring sensor 44 at time $t_2$ is approximately symmetrical to the orientation of distance measuring sensor 44 at time $t_3$ along a plane H, wherein plane H crosses over the point of rotation of tire 34 and is perpendicular to plane G that approximates the ground surface 50.

In the example depicted in Figure 5, controller 48 is configured to initially obtain an orientation signal indicating the orientation of distance measuring sensor 44 in relation to the ground surface 50, and obtain from distance measuring sensor 44, a first distance signal indicating the distance between the inner surface 38 of the tire 34 and the rim 30 along axis $A_2$, based on a determination that a first angle between the orientation of the distance measuring sensor 44 and the ground surface 50, i.e. the angle formed between axis $A_2$ and plane G, is within a predetermined range. Controller 48 then obtains from distance measuring sensor 44, a second distance signal indicating the distance between the inner surface of the tire and the rim along axis $A_3$ based on a determination that a second angle between the orientation of the distance measuring sensor 44 and the ground surface 50, i.e. the angle formed between axis $A_3$ and

plane G is within the same predetermined range as the angle formed between axis $A_2$ and plane G. In a preferred embodiment controller 48 obtains measurements from distance measuring sensor 44 when the angle formed between axis $A_2$ and plane G is symmetrical along a vertical plane to the angle formed between axis $A_3$ and plane G.

Controller 48 may then calculate an "average compression" of tire 34 based on the two measured distances, the geometry of the rim and the axle and the two angles between axis $A_2$, $A_3$ and plane G respectively. Based on the above, the controller 48 may calculate distance d' of the notional point $G'_1$. The average compression of the contact patch may then be calculated using the formula

$$c = d_0 - d'$$

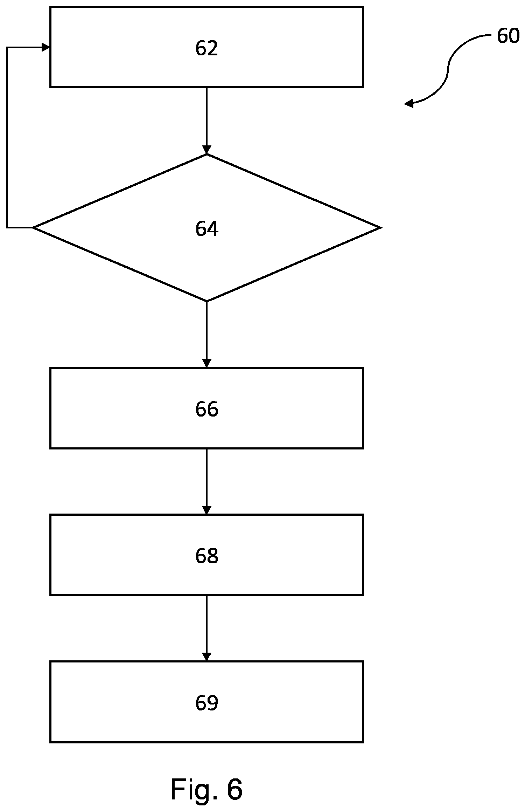

Figure 6 depicts a flowchart of method 60 according to the disclosure. Method 60 enables calculating the load on tire 34 of work vehicle 10, the tire 34 being mounted on a rim 30 of the work vehicle 10, wherein tire 34 has an inner surface 38 facing the rim 30 and an outer surface 39 and wherein the outer surface 39 is in contact with ground surface 50 when the work vehicle 10 is in use.

At step 62 controller 48, which may be mounted on rim 30, obtains an orientation signal, the orientation signal indicating the orientation or angle of a distance measuring sensor 44, in relation to the ground surface, wherein distance measuring sensor 44 is configured to measure the distance d between the inner surface 38 of the tire 34 and the rim 30.

At step 64 controller 48 determines, based on the orientation signal obtained at step 62, if the angle or orientation of the distance measuring sensor 44 in relation to the ground surface 50 is within a predetermined angle range. The predetermined angle range may be any range that includes 90 degrees, for example, 80-100 degrees, 85-95 degrees, or 89-91 degrees. In a preferred embodiment of the invention, the distance signal is obtained from the distance measuring sensor 44 in response to determining that the angle and/or orientation of the distance measuring sensor 44 in relation to the ground surface is 90 degrees. If the angle between the orientation of the distance measuring sensor 44 and the ground surface 50 is within the predetermined range, method 60 proceeds to step 66 otherwise method 60 returns to step 62.

At step 66, controller 48 in response to determining that the angle between the orientation of the distance measuring sensor and the ground surface is within the predetermined range, obtains from the distance measuring sensor a distance signal, wherein the distance signal indicates the distance d between the inner surface of the tire and the rim. Controller 48 may calculate the compression of tire 34 using formula

$$c = d_0 - d$$

where $d_0$ is the distance of the inner surface 38 from the rim at parts of tire 34 that are not in contact with the ground surface 50, i.e. the distance of the inner surface 38 from the rim at parts of the tire 34 that are not part of the contact patch. In certain embodiments, controller 48 is configured to obtain multiple output signals from the distance measuring sensor whilst the orientation of the distance measuring sensor and the ground surface is within the predetermined range and select the minimum value of distance d from a range of distance measurements to calculate the compression of tire 34.

At step 68, controller 48, obtains from the CTIS of working vehicle 10 a pressure signal indicating the pressure of the gas inside the tire 34.

At step 69, controller 48, calculates the load on tire 34 as described above based on the pressure signal and the compression of tire 34. Optionally at step 69, controller 48 provides to controller 32 a signal indicating the determined load on tire 34.

Alternatively, controller 32, that maintains via the CTIS the pressure in tire 34 to a predetermined value, may obtain from controller 48 a signal indicating the compression of tire 34, and then calculate the load on tire 34 based on the compression of tire 34 and the predetermined value of pressure in tire 34.

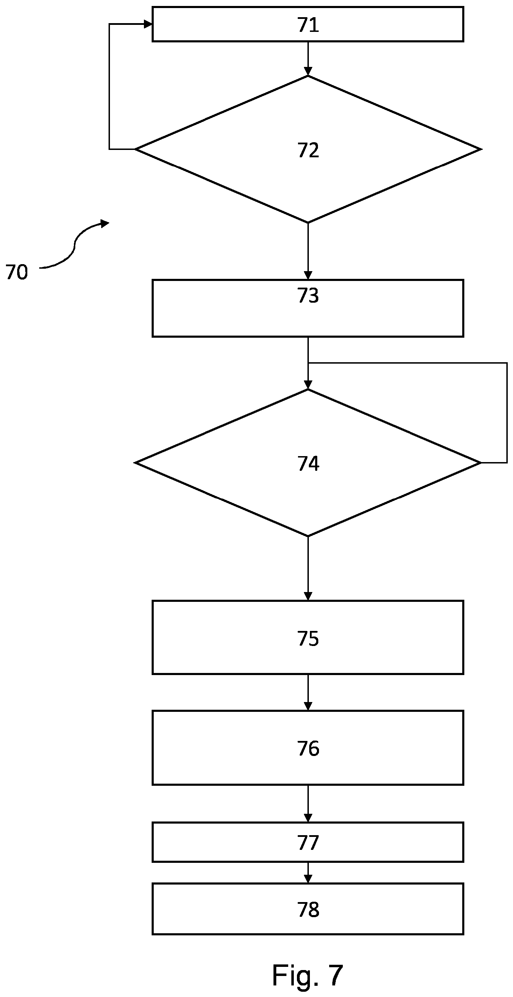

Figure 7 depicts a flowchart of method 70 according to the disclosure. Method 70 enables calculating the load on tire 74 of work vehicle 10, the tire 74 being mounted on a rim 30 of the work vehicle 10, wherein tire 34 has an inner surface 38 facing the rim 30 and an outer surface 39 and wherein the outer surface 39 is in contact with ground surface 50 when the work vehicle 10 is in use.

At step 71 controller 48, which may be mounted on rim 30, obtains an orientation signal, the orientation signal indicating the orientation or angle of a distance measuring sensor 44, in relation to the ground surface, wherein distance measuring sensor 44 is configured to measure the distance d between the inner surface 38 of the tire 34 and the rim 30.

At step 72, controller 48 determines, based on the orientation signal obtained at step 71, if the angle or orientation of the distance measuring sensor 44 in relation to the ground surface 50 is within a predetermined angle range. The predetermined angle range spans between 20 and 85 degrees, for example, 60-85 degrees, 70-80 degrees, or 75-78 degrees. In a preferred embodiment of the invention, the distance signal is obtained from the distance measuring sensor 44 in response to determining that the angle of the distance measuring sensor 44 in relation to the ground surface is an acute angle, i.e. less than 90 degrees. If the angle between the orientation of the distance measuring sensor 44 and the ground surface 50 is within the predetermined range and/or an acute angle, method 70 proceeds to step 73, otherwise method 70 returns to step 71.

At step 73, controller 48 obtains from the distance measuring sensor 44 a distance signal indicating the distance between the inner surface of the tire and the rim 30. The process proceeds to step 74.

At step 74, controller 48 controller 48 obtains another orientation signal indicating the orientation or angle of distance measuring sensor 44, in relation to the ground surface and determines, if the angle or orientation of the distance measuring sensor 44 in relation to the ground surface 50 is within the predetermined angle range used in step 72. If the angle between the orientation of the distance measuring sensor 44 and the ground surface 50 is within the predetermined range used in step 72and/or the same acute angle as determined in step 72, method 70 proceeds to step 75.

At step 75, controller 48 obtains from the distance measuring sensor 44 a distance signal indicating the distance between the inner surface of the tire and the rim 30. The process proceeds to step 76.

At step 76 controller 48, obtains from the CTIS of working vehicle 10 a pressure signal indicating the pressure of the gas inside the tire 34. The process proceeds to step 77.

At step 77, controller 48 calculates an "average compression" of tire 34 at the contact patch based on the first angle, the first measured distance, the angle or orientation of the distance measuring sensor 44 when the first measured distance was measured, the second measured distance, the angle or orientation of the distance measuring sensor 44 when the second measured distance was measured, and the pressure signal. The process proceeds to step 78.

At step 78, controller 48, calculates the load on tire 34 based on the calculated average compression and the pressure signal.

Alternatively, controller 32, that maintains via the CTIS the pressure in tire 34 to a predetermined value, may obtain from controller 48 a signal indicating the average compression of tire 34, and then calculate the load on tire 34 based on the average compression of tire 34 and the predetermined value of pressure in tire 34.Although methods 60 and 70 describe a sequential sequence of steps, the steps may in some embodiments be reordered, or some steps may be eliminated. For example, controller 48 may have a memory with pre-installed the desired value of pressure for tire 34, and thus in certain embodiments it may be communicatively isolated from controller 32. In such embodiments steps 68 and 77 may be skipped. Alternatively, controller 48 may obtain the pressure signal before steps 62 and 71 respectively.

**Claims**

1. A computer-implemented method for calculating the load on a tire of a work vehicle, the tire being mounted on a rim of the work vehicle, the tire having an inner surface facing the rim and an outer surface, the outer surface being in contact with a ground surface when the work vehicle is in use, the method comprising:

    obtaining an orientation signal, the orientation signal indicating the orientation of a distance measuring sensor in relation to the ground surface;

    determining, based on the orientation signal, that a first angle between the orientation of the distance measuring sensor and the ground surface is within a predetermined range;

    in response to determining that the first angle between the orientation of the distance measuring sensor and the ground surface is within a predetermined range, obtaining, from a distance measuring sensor, a first distance signal, the first distance signal indicating the distance between the inner surface of the tire and the rim;

    obtaining a pressure signal, the pressure signal indicating the pressure of a gas inside the tire; and

    calculating a load on the tire based on the measured distance signal and the pressure signal.

2. The computer-implemented method of claim 1, wherein the distance measuring sensor is mounted on the rim and facing the tire.

3. The computer-implemented method of claim 1, wherein the distance measuring sensor is mounted on the tire and facing the rim.

4. The computer-implemented method of any of the preceding claims, wherein the orientation signal is provided by an orientation sensor mounted on the distance measuring sensor.

5. The computer-implemented method of any of the preceding claims, wherein the distance signal is obtained from the distance measuring sensor in response to determining that the angle between the orientation of the distance measuring sensor and the ground surface is 90 degrees.

6. The computer-implemented method of any of the preceding claims, wherein the distance measuring sensor is a time-of-flight sensor.

7. The computer-implemented method of any of the preceding claims, wherein the distance measuring sensor is a laser distance sensor.

8. The computer-implemented method of any of the preceding claims, wherein the orientation sensor comprises at least a gyroscope, an accelerometer or a geomagnetic field sensor.

**9.** The computer-implemented method of any of the preceding claims, further comprising:

> determining, based on the orientation signal, that a second angle between the orientation of the distance measuring sensor and the ground surface is within a second predetermined range;
> in response to determining that the second angle between the orientation of the distance measuring sensor and the ground surface is within the first predetermined range, obtaining, from the distance measuring sensor, a second distance signal, the distance signal indicating the distance between the inner surface of the tire and the rim; and
> calculating the load on the tire based on the first angle, the first measured distance, the second angle, the second measured distance, and the pressure signal.

**10.** A load-calculating apparatus for a tire of a work vehicle, the tire being mounted on a rim of the work vehicle, the tire having an inner surface facing the rim and an outer surface, the outer surface being in contact with a ground surface when the work vehicle is in use, the load-calculating apparatus comprising:

> a distance measuring sensor configured to output a distance signal, the distance signal indicating the distance between the inner surface of the tire of the work vehicle and the rim;
> an orientation sensor configured to output an orientation signal, the orientation signal indicating the orientation of the distance measuring sensor in relation to a ground surface; and
> a controller configured to implement the computer-implemented method of any of the preceding claims.

**11.** The load-calculating apparatus of claim 10 wherein the distance measuring sensor, the orientation sensor and the controller are combined in a single sensor package.

**12.** The load-calculating apparatus of claims 10 or 11 wherein the controller is communicatively coupled to a central controller of the work vehicle to obtain the pressure signal.

**13.** The load-calculating apparatus of claim 12, wherein the central controller comprises a central tire inflation system, the central tire inflation system configured to maintain the tires of the work vehicle at a pre-defined pressure.

**14.** A work vehicle comprising the load-calculating apparatus of any of claims 10-13.

**15.** The work vehicle of claim 14, wherein the work vehicle is a tractor.

Fig. 1

34

36

39

30

38

40

Fig. 2

A

48

B

46

44

42

Fig. 3

Fig. 4

Fig. 5

Fig. 6

Fig. 7

Fig. 8

Europäisches
Patentamt
European
Patent Office
Office européen
des brevets

# EUROPEAN SEARCH REPORT

**Application Number**

EP 25 18 1909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 110 361 082 B (MAI DERONG) 14 May 2021 (2021-05-14) * paragraph [0005] - paragraph [0013] * * paragraph [0015] - paragraph [0021] * * paragraph [0027] - paragraph [0030] * * paragraph [0054] - paragraph [0065] * * figures 1-11 * ----- | 1-15 | INV. G01G19/10 B60C23/06 |
| A | JP 2015 137851 A (TAIHEIYO KOGYO KK) 30 July 2015 (2015-07-30) * paragraph [0007] - paragraph [0010] * * paragraph [0015] - paragraph [0018] * * paragraph [0026] - paragraph [0029] * * figures 1-5 * ----- | 1-15 | |

TECHNICAL FIELDS
SEARCHED     (IPC)

G01G
B60C

The present search report has been drawn up for all claims

| Place of search | Date of completion of the search | Examiner |
|---|---|---|
| The Hague | 11 August 2025 | Koch, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 1909

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2025

| Patent document cited in search report | | Publication date | Patent family member(s) | | Publication date |
|---|---|---|---|---|---|
| CN 110361082 | B | 14-05-2021 | CN | 110361082 A | 22-10-2019 |
| | | | WO | 2020259044 A1 | 30-12-2020 |
| JP 2015137851 | A | 30-07-2015 | NONE | | |

EPO FORM P0459

For more details about this annex : see Official Journal of the European Patent Office, No. 12/82

**REFERENCES CITED IN THE DESCRIPTION**

**Patent documents cited in the description**

- EP 4186716 A1